# EUROPÄISCHE PATENTANMELDUNG

(11) **EP 0 698 764 A2**
(43) Veröffentlichungstag der Anmeldung: **28.02.1996**
(21) Anmeldenummer: 95111878.5
(22) Anmeldetag: 28.07.1995
(51) Int. Cl.: F23C 9/00, F23C 11/00

(54) **Brenner zur flammenlosen Verbrennung eines Brenngas-Luftgemisches**

(30) Priorität: 26.08.1994 DE 4430267
(71) Anmelder: ROBERT BOSCH GMBH, D-70442 Stuttgart (DE)
(72) Erfinder: Daniel, Walter, Dipl.-Ing. (FH), D-71065 Sindelfingen (DE); Sarholz, Walter, Dr., D-70469 Stuttgart (DE); Lehr, Walter, Dr., D-70469 Stuttgart (DE); Klopfer, Martin, Dr. Dipl.-Ing., D-73262 Reichenbach (DE); Eckert, Wilhelm, Dr. Dipl.-Ing., D-73312 Geislingen (DE)

(57) **Zusammenfassung**

Die Erfindung geht aus von einem Brenner mit flammenloser Oxidation des Brennstoffs, bei welchem einem Reaktionsraum eine Mischzone vorgelagert ist, in welcher eine Teilmenge des Abgases aus dem Reaktionsraum durch Injektorwirkung in die zuströmenden Verbrennungskomponenten gelangt.

Es wird vorgeschlagen, Brennstoff und Luft bereits vorgemischt in ein in den Reaktionsraum (14, 56, 74, 100) führendes Mischrohr (12, 54, 64, 94) einzublasen und zum Hineinreißen der rückgeführten Abgasteilmenge in das Mischrohr den Impuls des Brennstoff-Luftgemisches zu nutzen.

Dadurch ist gegenüber dem bekannten Stand der Technik erreicht, daß schon bei wesentlich geringeren Einströmgeschwindigkeiten von Brennstoff und Luft beziehungsweise geringeren Förderdrücken des Fördergebläses die gewünschte mehrfache, beispielsweise 5- bis 8-fache Menge an Abgas mitgerissen und vollständig zugemischt wird.

## Beschreibung

### Stand der Technik

Die Erfindung geht aus von einem Brenner nach der Gattung des Hauptanspruchs. Bei Brennern dieser Gattung findet die Oxidation des Brennstoffs in einem Temperaturbereich statt, in welchem noch keine nennenswerte thermische NOₓ-Bildung erfolgt. Bei bekannten Brennern der genannten Gattung (Gas wärme international, Band 41, 1992, Heft 10, Seiten 438 bis 444) wird das Abgas durch die noch nicht mit dem Brennstoff vorgemischte Luft in die Mischzone, beziehungsweise die Brennkammer des Brenners eingesaugt. Damit sich Luft und Abgas in einem für die flammenlose Oxidation als notwendig erachteten Verhältnis von zum Beispiel 1:5 mischen, ohne daß zunächst eine Reaktion zwischen dem gleichzeitig getrennt zugeführten Brennstoff und der Luft eintritt, muß die Luft mit hoher Geschwindigkeit, beispielsweise mit 100 m/s, in die Mischzone und die Brennkammer eingeblasen werden. Bei kleineren Einströmgeschwindigkeiten besteht die Gefahr, daß sich eine Flamme mit wesentlich höherer Schadstoffemission ausbildet. Für eine Einströmgeschwindigkeit von 100 m/s ist jedoch ein hoher Überdruck von beispielsweise 60 mbar erforderlich. Gebläse, die diesen Druck erzeugen, sind sehr laut. Bei Geräten, die für den Wohnbereich bestimmt sind, ist die damit verbundene Geräuschbelästigung nicht akzeptabel.

### Vorteile der Erfindung

Die erfindungsgemäße Ausbildung des Brenners mit den kennzeichnenden Merkmalen des Hauptanspruchs hat demgegenüber den Vorteil, daß das vorgemischte Brennstoff-Luftgemisch in Verbindung mit dem Mischrohr schon bei wesentlich geringeren Einströmgeschwindigkeiten die gewünschte mehrfache, beispielsweise fünf- bis achtfache Menge an Abgas mitzureißen und vollständig zu mischen vermag. Dafür reichen Gebläse mit wesentlich geringeren Förderdrücken aus, wie sie bei den üblichen Vormischbrennern in Brauchwassererhitzern bereits verwendet werden. Die Mischtemperatur aus dem Brennstoff-Luftgemisch von 20° C und der rückgeführten Abgasteilmenge soll vorteilhaft nicht über etwa 700° C liegen. Bei dieser Temperatur erfolgt noch keine Reaktion zwischen dem Brennstoff und dem Sauerstoff. Um eine nennenswerte bevorzugte Mischtemperatur von ca. 600° C zu erreichen, muß das Abgas mit etwa 720° C in das Mischrohr einströmen. Im Mischrohr steigt die Temperatur an, bis bei etwa 900° C bis 1000° C der Brennstoff ohne Flammenbildung oxidiert und seine Oxidationswärme abgibt, wobei die Temperatur um ca. 400 K auf eine Endtemperatur ansteigt, bei welcher, wie angestrebt, noch keine NOₓ-Bildung stattfindet. Zum Starten des Brenners genügt es, das Luft-Brennstoffgemisch mit reduzierter Menge einzublasen und durch entsprechende Hilfsmittel, wie Zündelektroden, zu zünden. Dadurch bildet sich zunächst eine in das Mischrohr konventionelle Flamme aus, die das System auf Betriebstemperatur bringt. Ist diese erreicht, wird die Menge des eingeblasenen Brennstoff-Luftgemisches erhöht, wobei sich die Flamme von der beziehungsweise den Brennerdüsen entfernt und schließlich in die flammenlose Oxidation umschlägt. Auch ist es möglich, die Zufuhr des Brennstoff-Luftgemisches kurzzeitig zu unterbrechen und nach Erlöschen der Flamme das Gemisch ohne Zündung erneut zuzuführen, wodurch die flammenlose Oxidation beginnt. Eine besondere Umschaltung der Luft- und Brennstoffwege ist dabei nicht notwendig.

Durch die in den Unteransprüchen aufgeführten Merkmale sind vorteilhafte Weiterbildungen der Anordnung nach dem Hauptanspruch möglich.

Eine getrennte Ausführung ergibt sich, wenn der Reaktionsraum in einer das Mischrohr umgebenden Brennkammer gebildet ist. Dabei kann vorteilhaft das Mischrohr so bemessen beziehungsweise gestaltet sein, daß die flammenlose Oxidation des Brennstoffs bereits in einem stromab liegenden Endabschnitt des Mischrohres beginnt. Um bei dieser Ausführung eine zu starke Abkühlung des Abgases vor der Wärmeaustauschzone beziehungsweise dem Eingangsbereich in das Mischrohr zu verhindern, wird zweckmäßig die außenliegende Brennkammerwand in dem Bereich, in welchem die flammenlose Oxidation stattfindet, durch Auskleidung mit einer temperaturfesten Isolation auf einem Niveau von ca. 900° C bis 1000° C gehalten.

Ein vorteilhaftes Temperaturprofil des Abgases auf seinem Weg vom Reaktionsraum zum Eingangsbereich des Mischrohres ergibt sich auch, wenn der Reaktionsraum von einem Abgaskanal und dieser mindestens bereichsweise von einer das aufzuheizende Fluid aufnehmenden Kammer umgeben ist. Eine unerwünschte Reaktion im Eingangsbereich des Mischrohrs wird vermieden, wenn das Mischrohr im Eingangsbereich thermisch isoliert ausgeführt ist und stromab davon einen den inneren Rohrquerschnitt bis auf einen Ringspalt verengenden, vorzugsweise aus hochtemperaturbeständiger Keramik bestehenden Verdrängerkörper enthält und im Bereich des Verdrängerkörpers von einem das Abgas führenden engen Ringspalt umgeben ist. Durch entsprechende Anordnung des Verdrängerkörpers kann die Wärmeübertragung vom Abgas auf das Brennstoff-Luft-Abgasgemisch im Mischrohr auf den reaktionsraumnahen Bereich des Mischrohrs konzentriert werden.

Auch bei dieser Anordnung kann die flammenlose Oxidation bereits im Endabschnitt des Mischrohrs beginnen, wenn dieser in den Reaktionsraum hineingeführt ist.

Der den Verdrängerkörper aufnehmende, nicht thermisch isolierte Abschnitt des Mischrohrs, der vorteilhaft aus hochtemperaturbeständigem SiSiC besteht, kann einen gegenüber dem Eingangsabschnitt des Mischrohrs erweiterten Durchmesser haben, so daß sich die Fläche des Strömungsquerschnitts trotz Verengung im Ringspalt nicht zu stark verringert.

Ein günstiger Temperaturverlauf im Abgasweg ergibt sich auch bei dieser Ausführung, wenn der das Abgas führende Ringspalt im Bereich des Verdrängerkörpers durch einen ungekühlten Außenwandabschnitt und in dem den Eingangsabschnitt des Mischrohrs umgebenden Bereich durch einen vom zu beheizenden Fluid gekühlten Außenwandabschnitt begrenzt ist.

Bei einem Brenner mit katalytischer Unterstützung der flammenlosen Oxidation ergibt sich eine bevorzugte Ausführung, wenn ein Mischrohr über seine ganze Länge von einer Abgaskammer umgeben und gegenüber dieser thermisch isoliert ausgeführt ist, und wenn ferner im stromabliegenden Ende des Mischrohrs ein Katalysator angeordnet und in der Abgaskammer beziehungsweise an deren Außenwand mindestens ein Wärmetauscher vorgesehen ist, der das Abgas in einen für die Zurückführung in das Mischrohr geeigneten Temperaturbereich, beispielsweise auf ca. 900° C herunterkühlt.

Bei katalytischen Brennern kommt dem Temperaturgang im Katalysator eine besondere Bedeutung zu. Bei den bekannten Brennertypen wird die Temperatur im Katalysator entweder durch weitgehenden Verzicht auf eine Regelbarkeit der Leistung oder durch aufwendige Regelungen, wie beispielsweise gekühlte Katalysatoren erreicht. So wird beispielsweise zunächst in einem beschichteten, von außen gekühlten Katalysatorrohr ein Teil des Gases verbrannt und erst anschließend daran in einer zweiten, aus einem Wabenkatalysator bestehenden Stufe das Gas vollständig abreagiert. Bei der erfindungsgemäßen Ausführung ist nur eine Katalysatorstufe erforderlich, in der heute bereits in Großserien hergestellte Katalysatoren eingesetzt werden können. Geregelt werden muß in Abhängigkeit von der gewünschten Brennerleistung lediglich die Kühlung des Abgasstroms auf die zur Vermischung mit dem Brennstoff-Luftgemisch gewünschte Temperatur. Dies ist über eine entsprechende Ausführung des Wärmetauschers in der Abgaskammer oder der gekühlten Brennkammerwand, durch zuschaltbare Wärmetauscher oder andere konstruktive Maßnahmen vergleichsweise einfach möglich. Das die Temperatur der Brennstoff-Luft-Abgasmischung maßgeblich beeinflussende Mischungsverhältnis zwischen Brennstoff-Luftgemisch und Abgas ist von der einströmenden Brennstoff-Luftmenge und damit der Leistung des Brenners unabhängig.

Bei allen beschriebenen Ausführungen kann ein Kranz von Düsen zum Einblasen des vorab aufbereiteten Brennstoff-Luftgemisches in das Mischrohr vorgesehen sein. Diese Maßnahme erlaubt es, den Durchmesser und die Länge des Mischrohrs kleiner als bei einer Ausführung mit zentraler Zuführung des Brennstoff-Luftgemisches zu bemessen.

### Zeichnung

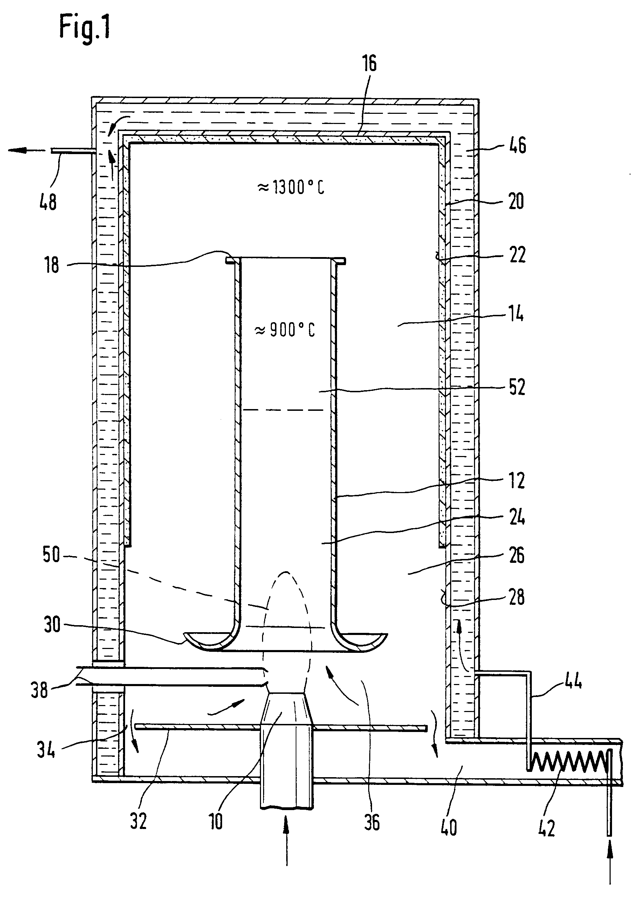

Vier Ausführungsbeispiele des Gegenstandes der Erfindung sind in der Zeichnung dargestellt und in der nachfolgenden Beschreibung näher erläutert. In den Figuren 1 bis 4 ist je eines der Ausführungsbeispiele vereinfacht im Längsschnitt dargestellt.

### Beschreibung der Ausführungsbeispiele

Der Brenner nach Figur 1 hat eine Düse 10, durch welche ein vorab aufbereitetes Brennstoff-Luftgemisch in ein koaxial und im axialen Abstand zur Düse 10 angeordnetes Mischrohr 12 eingeblasen wird. Zum Mischen von Brennstoff und Luft kann ein Injektor bekannter Ausführung vorgesehen sein. Das Mischrohr 12 ist von einer Brennkammer 14 umgeben, deren obere Stirnwand 16 im axialen Abstand zum ausgangsseitigen Stirnende 18 des Mischrohrs 12 angeordnet ist. Die Stirnwand 16 und die zylindrische Mantelwand 20 der Brennkammer 14 sind innen mit einer temperaturfesten Isolierung 22 ausgekleidet, die bis auf die Höhe des Eingangsbereichs 24 des Mischrohrs 12 herunterreicht.

Unterhalb der Isolierung 22 schließt sich an die Brennkammer 14 eine Abgaskammer 26 an, deren zylindrische Außenwand 28 in der Zeichnung der Einfachheit halber als Verlängerung der Mantelwand 20 der Brennkammer 14 dargestellt ist. Die Eingangsöffnung des Mischrohrs 12 ist von einem Randflansch 30 umgeben, der etwa um 135° nach außen gewölbt ist. An der Düse 10 ist ein Leitblech 32 befestigt, das bis auf einen Ringspalt 34 an die Außenwand 28 der Abgaskammer 26 heranreicht. Zwischen dem Randflansch 30 und dem Leitblech 32 ist eine ringförmige Injektoröffnung 36 gebildet, die aus der Abgaskammer 26 in das Mischrohr 12 führt und in welcher bis nahe an die Düse 10 heranreichende Zündelektroden 38 angeordnet sind.

Unterhalb des Leitblechs 32 führt ein Abgaskanal 40 aus der Abgaskammer 26 heraus, in welchem ein Wärmetauscher 42 angeordnet ist, der im Zuge einer Leitung 44 für zu erhitzendes Heizungswasser liegt. Die Leitung 44 führt in eine Wasserkammer 46, welche die Abgaskammer 26 und die Brennkammer 14 umgibt, wobei die nicht isolierte Außenwand 28 der Abgaskammer 26 einen weiteren Wärmeübertrager vom Abgas auf das Heizungswasser bildet. Im oberen Bereich ist die Wasserkammer 46 mit einem Anschluß für eine weiterführende Heizwasserleitung 48 versehen. Bei Inbetriebnahme des Brenners wird das Brennstoff-Luftgemisch in reduzierter Menge eingeblasen und gezündet. Danach bildet sich zunächst eine konventionelle Flamme 50 aus, die das System auf Betriebstemperatur bringt. Wenn diese erreicht ist, wird die eingeblasene Gemischmenge erhöht, wodurch sich die Flamme 50 von der Düse 10 entfernt und die flammenlose Oxidation des Brennstoffs einsetzt:
Durch die Vermischung von Brennstoff und Luft und die Anordnung des Mischrohrs 12 wird die für das einwandfreie Arbeiten des Brenners notwendige, beispielsweise ca. 5fache Menge an Abgas bereits mitgerissen, wenn das Vorgemisch mit einem Druck von etwa 5 mbar zugeführt wird. Die konstruktive Ausgestaltung des Brenners ist so gewählt, daß der mitgerissene Abgasstrom eine zwischen 720° und 900° C liegende Temperatur hat, wodurch sich eine Mischtemperatur im Eingang des Mischrohrs 12 von ca. 600° bis 700° c ergibt. In diesem Temperaturbereich erfolgt noch keine Reaktion zwischen dem Brennstoff und dem Sauerstoff. Im Eingangsbereich 24 des Mischrohrs 12 findet eine vollständige Vermischung des Abgases mit dem Vorgemisch aus Brennstoff und Luft statt.

Die Länge des Mischrohrs 12 ist so bemessen, daß durch Wärmeübertragung aus der Brennkammer 14 die Temperatur im Brennstoff-Luft-Abgasgemisch im Ausgangsbereich 52 des Mischrohrs 12 bis auf ca. 900° C ansteigt und dort die flammenlose Oxidation des Brennstoffs beginnt. Dabei gibt der Brennstoff seine Bindungswärme ab, wobei die Temperatur um ca. 400 K weiter auf ca. 1300° C ansteigt. Bei dieser Temperatur kann sich noch kein schädliches NOₓ bilden. Zum vollständigen Ausbrand ist eine gewisse Verweilzeit notwendig, die durch eine entsprechende Größe der Brennkammer 14 gewährleistet ist. Durch die Isolation 22 ist die Brennkammerwand im Bereich der flammenlosen Oxidation auf dem notwendigen Temperaturniveau von ca. 900° C bis 1000° C gehalten.

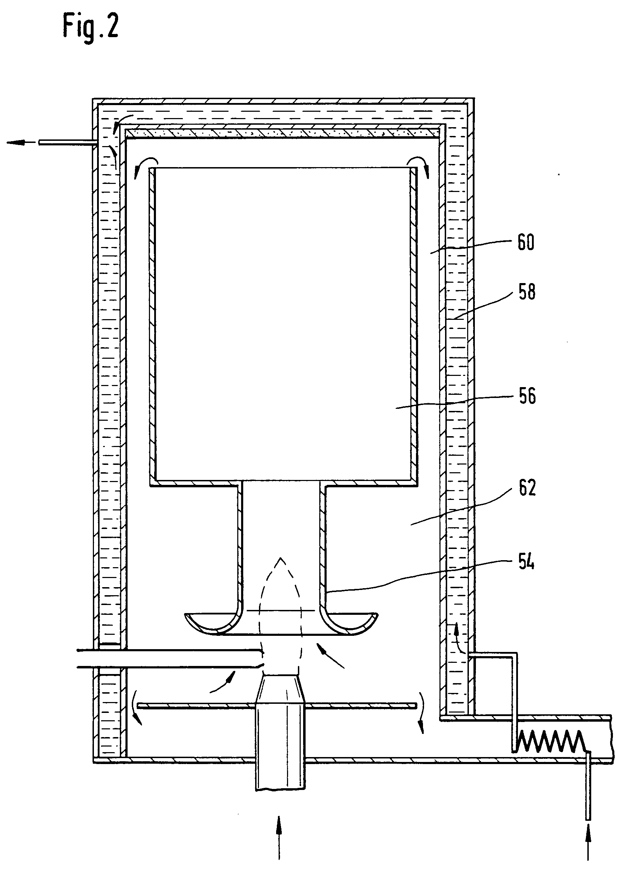

Das aus der Brennkammer 14 austretende Abgas gibt an der Außenwand 28 der Abgaskammer 26 Wärme an das Heizungswasser in der Wasserkammer 46 ab. Dabei kühlt sich das Abgas auf das für den Eintritt in das Mischrohr 12 notwendige Temperaturniveau ab. Der nicht an der Mischung beteiligte Abgasstrom gibt im Abgaskanal 40 über den Wärmetauscher 42 ebenfalls Wärme an das Heizungswasser ab.
Der Brenner nach Figur 2 unterscheidet sich vom ersten Ausführungsbeispiel dadurch, daß ein Mischrohr 54 verkürzt ausgeführt ist und zwischen einer Brennkammer 56 und einer Wasserkammer 58 ein Abgaskanal 60 vorgesehen ist, der in eine das verkürzte Mischrohr 54 umgebende Abgaskammer 62 einmündet. Das aus dem Mischrohr 54 ausströmende Gemisch kommt in Kontakt mit den heißen Abgasen, wodurch die Temperaturgrenze der flammenlosen Verbrennung erreicht wird und die Oxidation des Brennstoffs mit dem Sauerstoff beginnt.

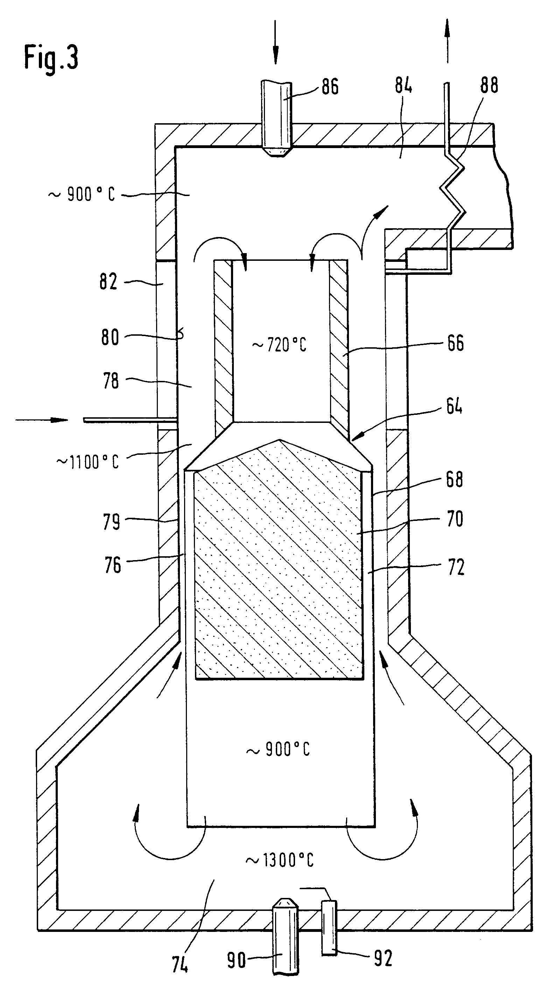

Beim Brenner nach Figur 3 besteht ein Mischrohr 64 aus einem am Umfang thermisch isolierten Eingangsabschnitt 66, an dem sich ein im Durchmesser vergrößerter Abschnitt 68 aus hochtemperaturbeständigem Werkstoff mit hoher Wärmeleitfähigkeit, beispielsweise aus SiSiC, anschließt. Im Abschnitt 68 ist ein vorzugsweise aus hochtemperaturbeständiger Keramik bestehender Verdrängerkörper 70 angeordnet, der den freien Durchgangsquerschnitt des Mischrohrs 64 bis auf einen Ringspalt 72 verengt. Stromab des Verdrängerkörpers 70 ragt der Abschnitt 68 in eine Brennkammer 74 hinein, aus der ein das Abgas führender enger Ringspalt 76 in eine den Eingangsabschnitt 66 des Mischrohrs 64 umgebende Abgaskammer 78 führt. Der Ringspalt 76 ist gebildet zwischen dem Abschnitt 68 des Mischrohrs 64 und einem ungekühlten Außenwandabschnitt 79, der mit einer thermischen Isolierung aus geeignetem Stoff, wie beispielsweise Faserkeramik, Keramikvlies oder Feuerleichtsteinen ausgekleidet ist.

Die Abgaskammer 78 ist am Außenumfang durch eine Wand 80 aus gut wärmeleitendem Material begrenzt, die durch eine Wasserkammer 82 gekühlt ist. An die Abgaskammer 78 schließt sich ein Abgaskanal 84 für das Abgas an, welches nicht in das Mischrohr 64 hineingerissen wird. Im Abgaskanal 84 ist ein Wärmetauscher 88 angeordnet, der im Zuge einer auch durch die Wasserkammer 82 führenden Leitung hierzu erhitzendes Heizungswasser liegt. Am Boden der Brennkammer 74 sind ein Zündbrenner 90 und daneben eine Zündelektrode 92 befestigt.

Das vorgewärmte Brennstoff-Luft-Abgasgemisch strömt durch den engen Ringspalt 72 im Mischrohr 64, wo es in intensiven Wärmekontakt mit dem Abgas kommt, das mit ca. 1300° C in den Ringspalt 76 einströmt. Das Gemisch wird dabei auf ca. 900° C bis 1000° C erhitzt, so daß die flammenlose Oxidation bereits hinter dem Verdrängerkörper 70 im Mischrohr 64 beginnt und sich in die gesamte untere Hälfte der Brennkammer 74 fortsetzt. Dabei entsteht eine Temperatur von ca. 1300° C, bei der jedoch noch keine NOₓ-Bildung auftritt. Im Ringspalt 76 kühlt das Abgas von 1300° C auf ca. 1100° C ab. Nach Verlassen des Ringspaltes 76 strömt das Abgas an der gekühlten Wand 80 entlang und wird dabei weiter auf die zur Vermischung mit dem vorab aufbereiteten Brennstoff-Luftgemisch erforderliche Temperatur von beispielsweise ca. 900° C abgekühlt.

Zum Starten des Brenners wird die Brennkammer 74 durch den Zündbrenner 90 auf Betriebstemperatur erhitzt, der Zündbrenner 90 anschließend abgeschaltet und danach das zur Verbrennung bestimmte Gemisch in die Brennkammer 74 eingeblasen. Es ist aber auch möglich, wie bei den vorbeschriebenen Ausführungsbeispielen den Brenner dadurch zu starten, daß zunächst das Brennstoff-Luftgemisch in reduzierter Menge zugeführt und durch Elektroden an der Düse 86 gezündet wird, worauf die entstehende konventionelle Flamme das System auf Betriebstemperatur bringt. Durch die Ausbildung der engen Ringspalte 72, 76 für Gemisch und Abgas kann die Wärme vom Abgas auf das Gemisch innerhalb einer sehr kurzen Baulänge übertragen werden.

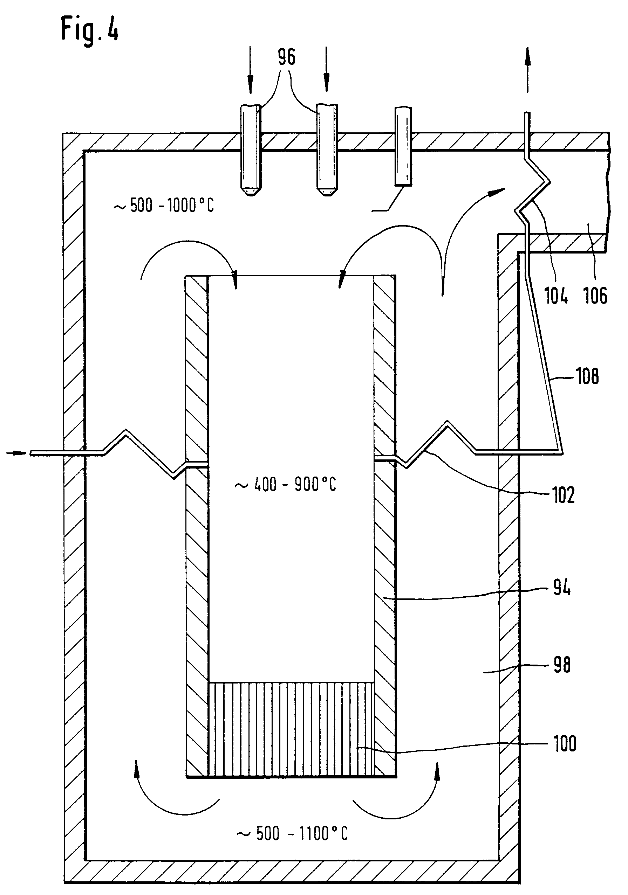

Der Brenner nach Figur 4 hat ein Mischrohr 94, in welches das vorab aufbereitete Brennstoff-Luftgemisch über einen Kranz von Düsen 96 eingeblasen wird. Das Mischrohr 94 ist über seine ganze Länge von einer Abgaskammer 98 umgeben und gegenüber dieser thermisch isoliert ausgeführt. Am Ausgang des Mischrohrs 94 ist ein den Reaktionsraum bildender beziehungsweise enthaltender Katalysator 100 vorgesehen. In der Abgaskammer 98 ist ein Wärmetauscher 102 angeordnet, der in Reihe mit einem Wärmetauscher 104 in einem Abgaskanal 106 im Zuge einer heizwasserführenden Leitung 108 liegt.

Die Teile des Brenners nach Figur 4 sind vorzugsweise so bemessen beziehungsweise gestaltet und stofflich ausgeführt, daß das Gemisch aus Brennstoff, Luft und Abgas je nach der gewünschten Temperaturerhöhung im Katalysator 100 vor diesem eine Temperatur zwischen 400° und 900° C erreicht. Das Gemisch strömt nach einer ausreichend dimensionierten Vormischlänge im Mischrohr 94 durch den Katalysator 100, in welchem der Brennstoff mit dem in der Luft enthaltenen Sauerstoff reagiert. Durchmesser und Länge des Katalysators 100 hängen von der maximalen Leistung des Brenners ab; zum Einsatz kommen beispielsweise handelsübliche monolithische Katalysatoren. Die im Katalysator 100 bei der Reaktion des Brennstoffs auftretende Temperaturerhöhung hängt nur vom Mischungsverhältnis des Brennstoff-Luftgemisches mit dem Abgas ab und muß in Abhängigkeit von der optimalen Betriebstemperatur des Katalysators und der hinsichtlich der Lebensdauer günstigsten Temperatur durch eine entsprechende Auslegung des Mischrohrdurchmessers eingestellt werden. Nach der vollständigen Reaktion des Brennstoffs im Katalysator 100 strömt das Abgas zurück und wird über den Wärmetauscher 102 auf die für die Vermischung mit dem Brennstoff-Luftgemisch erforderliche Temperatur, beispielsweise auf ca. 500° bis 1000° C abgekühlt. Die nicht zur Vermischung mit dem Brennstoff-Luftgemisch erforderliche Abgasmenge verläßt den Brenner durch den Abgaskanal 106, wobei die verbleibende Wärme über den Wärmetauscher 104 an das zu beheizende Medium abgegeben wird.

## Patentansprüche

1. Brenner zur flammenlosen Verbrennung eines Brenngas-Luftgemisches, mit einer einem Reaktionsraum vorgelagerten Mischzone, in welcher eine Teilmenge des Abgases aus dem Reaktionsraum durch Injektorwirkung in die zuströmenden Verbrennungskomponenten gelangt, dadurch gekennzeichnet, daß Brennstoff und Luft bereits vorgemischt in ein in den Reaktionsraum (14, 56, 74, 100) führendes Mischrohr (12, 54, 64, 94) eingeblasen werden und daß die rückgeführte Abgasteilmenge durch das Brennstoff-Luftgemisch in das Mischrohr (12, 54, 64, 94) hineingerissen wird.

2. Brenner nach Anspruch 1, dadurch gekennzeichnet, daß der Reaktionsraum in einer das Mischrohr (12) umgebenden Brennkammer (14) gebildet ist.

3. Brenner nach Anspruch 2, dadurch gekennzeichnet, daß das Mischrohr (12) so bemessen beziehungsweise gestaltet ist, daß die flammenlose Oxidation des Brennstoffs bereits in einem stromab liegenden Endabschnitt (52) des Mischrohrs (12) beginnt.

4. Brenner nach Anspruch 2 oder 3, dadurch gekennzeichnet, daß die außenliegende Brennkammerwand (16, 20) in dem Bereich, in welchem die flammenlose Oxidation stattfindet, durch Auskleidung mit einer temperaturfesten Isolation (22) auf einem Temperaturniveau von ca. 900° C bis 1000° C gehalten ist.

5. Brenner nach Anspruch 1, dadurch gekennzeichnet, daß der Reaktionsraum (56) von einem Abgaskanal (60) und dieser mindestens bereichsweise von einer das aufzuheizende Fluid aufnehmenden Kammer (58) umgeben ist.

6. Brenner nach Anspruch 1, dadurch gekennzeichnet, daß das Mischrohr (64) im Eingangsabschnitt (66) thermisch isoliert ausgeführt ist und stromab davon einen den inneren Rohrquerschnitt bis auf einen Ringspalt (72) verengenden, vorzugsweise aus hochtemperaturbeständiger Keramik bestehenden Verdrängerkörper (70) enthält und im Bereich des Verdrängerkörpers (70) von einem das Abgas führenden engen Ringspalt (76) umgeben ist.

7. Brenner nach Anspruch 6, dadurch gekennzeichnet, daß das das Mischrohr (64) hinter dem Verdrängerkörper (70) ein Stück weit in eine Brennkammer (74) hineinragt und die flammenlose Oxidation bereits in diesem Teil des Mischrohrs (64) beginnt.

8. Brenner nach Anspruch 6 oder 7, dadurch gekennzeichnet, daß der den Verdrängerkörper (70) aufnehmende Abschnitt (68) des Mischrohrs (64) aus hochtemperaturbeständigem Werkstoff besteht, vorzugsweise aus SiSiC.

9. Brenner nach einem der Ansprüche 6 bis 8, dadurch gekennzeichnet, daß der den Verdrängerkörper (70) aufnehmende Abschnitt (68) des Mischrohrs (64) einen gegenüber dessen Eingangsabschnitt (66) erweiterten Durchmesser hat.

10. Brenner nach einem der Ansprüche 6 bis 9, dadurch gekennzeichnet, daß der das Abgas führende Ringspalt (76) im Bereich des Verdrängerkörpers (70) durch einen ungekühlten Außenwandabschnitt (79) und in dem den Eingangsabschnitt (66) des Mischrohrs (64) umgebenden Bereich durch einen vom zu beheizenden Fluid gekühlten Außenwandabschnitt (80) begrenzt ist.

11. Brenner nach Anspruch 1, gekennzeichnet durch folgende Merkmale:
a) das Mischrohr (94) ist über seine ganze Länge von einer Abgaskammer (98) umgeben und gegenüber dieser thermisch isoliert ausgeführt,
b) am stromab liegenden Ende des Mischrohrs (94) ist ein den Reaktionsraum bildendender beziehungsweise enthaltender Katalysator (100) angeordnet, in welchem die Verbrennungskomponenten vollständig miteinander reagieren,
c) in der Abgaskammer (98) beziehungsweise an deren Außenwand ist mindestens ein Wärmetauscher (102) vorgesehen, der das aus dem Katalysator (100) austretende Abgas in einen für die Zurückführung in das Mischrohr (94) geeigneten Temperaturbereich herunterkühlt.

12. Brenner nach einem der vorhergehenden Ansprüche, dadurch gekennzeichnet, daß ein Kranz von Düsen (96) zum Einblasen des vorab aufbereiteten Brennstoff-Luftgemisches in das Mischrohr (12, 54, 64, 94) vorgesehen ist.
